# EUROPÄISCHE PATENTSCHRIFT

(11) **EP 3 679 509 B1**
(45) Veröffentlichungstag und Bekanntmachung des Hinweises auf die Patenterteilung: **06.01.2021**
(21) Anmeldenummer: 18807047.8
(22) Anmeldetag: 19.11.2018
(51) Int. Cl.: G06F 21/62, G06F 21/71, G06F 21/85

(54) **EIN-CHIP-SYSTEM FÜR EIN FAHRZEUG**
SYSTEM ON CHIP FOR A VEHICLE
SYSTÈME MONOPUCE POUR UN VÉHICULE

(30) Priorität: 21.11.2017 DE 102017220764
(43) Veröffentlichungstag der Anmeldung: 15.07.2020
(73) Patentinhaber: Audi AG, 85045 Ingolstadt (DE)
(72) Erfinder: KLEIN, Markus, 85104 Pförring (DE); ZAWADZKI, Kamil, 81827 München (DE); AHN, Changsup, 85057 Ingolstadt (DE); GRUBER, Hans Georg, 85049 Ingolstadt (DE)
(86) Internationale Anmeldenummer: PCT/EP2018/081704
(87) Internationale Veröffentlichungsnummer: WO 2019/101671

(56) Entgegenhaltungen:
- DE-A1-102015 002 191
- DE-A1-102016 123 744

## Beschreibung

Die Erfindung betrifft ein Ein-Chip-System (System on Chip, SoC) für ein Steuergerät eines Fahrzeug mit mindestens einem Bus, mindestens einer mit dem mindestens einen Bus verbundenen Steuereinheit (Controller, Ctrlr) zum Steuern eines der mindestens einen Steuereinheit zugeordneten peripheren Geräts und mehreren mit dem mindestens einen Bus verbundenen Prozessoren (Central Processing Unit, CPU).

Ein-Chip-Systeme integrieren mehrere Komponenten eines Rechners in einem Bauteil und werden zunehmend in modernen Fahrzeugen eingesetzt, beispielsweise in einem zentralen Steuergerät (Electronic Control Unit, ECU), welches dazu dient, unterschiedliche Funktionssysteme eines Fahrzeugs zu steuern. Zu den Funktionssystemen eines Fahrzeugs gehören einerseits Sicherheitssysteme, welche die Fahrsicherheit des Fahrzeugs betreffen, beispielsweise eine Motorsteuerung oder ein Bremssystem, und andererseits Komfortsysteme, welche den Komfort eines Fahrers des Fahrzeugs oder weiterer Insassen des Fahrzeugs erhöhen, beispielsweise ein Infotainmentsystem oder eine Klimaanlage.

Jedes Funktionssystem umfasst eine oder mehrere in dem Fahrzeug angeordnete Funktionseinheiten und ein den Funktionseinheiten zugeordnetes Betriebssystem (Operating System, OS), welches in dem zentralen Steuergerät gespeichert ist und ausgeführt wird. Entsprechend sind in dem zentralen Steuergerät zumeist mehrere sicherheitskritische Betriebssysteme und mehrere sonstige, beispielsweise komfortbezogene Betriebssysteme gespeichert und werden von dem Steuergerät parallel ausgeführt.

Häufig werden Sicherheitssysteme und/oder sonstige Funktionssysteme, wie beispielsweise Komfortsysteme, nicht von einem Fahrzeughersteller hergestellt, sondern von verschiedenen Fremdherstellern zugeliefert. Das kann dazu führen, dass sich die jeweils zugeordneten Betriebssysteme wechselseitig beeinflussen. Ein solches wechselseitiges Beeinflussen der Betriebssysteme kann sowohl auf einen unbeabsichtigten Programmierfehler als auch darauf zurückgehen, dass ein Betriebssystem eine Schadsoftware, beispielsweise einen Computervirus, umfasst. In der Folge kann es zu einer Fehlfunktion eines beeinflussten Betriebssystems kommen, was im Falle eines sicherheitskritischen Betriebssystems mit einer erhöhten Unfallgefahr des Fahrzeugs einhergeht.

Vor diesem Hintergrund ist es ein vorrangiges Bestreben des Fahrzeugherstellers, ein Ein-Chip-System für ein Steuergerät eines Fahrzeugs mit einem effektiven Schutz vor einem wechselseitigen Beeinflussen der mehreren in dem Steuergerät gespeicherten und parallel ausgeführten Betriebssysteme zu versehen.

Einen möglichen Ansatzpunkt für einen effektiven Schutz eines Steuergerätes vor einer Schadsoftware kann die Schadsoftware selbst bieten. Jede Schadsoftware weist im Allgemeinen eine charakteristische Bytefolge (Signatur) auf, an welcher sie mit hoher Wahrscheinlichkeit zutreffend erkannt werden kann.

So offenbart beispielsweise die US 2012/0036572 A1 ein Ein-Chip-System für ein mobiles Endgerät zum Erkennen einer Schadsoftware. Das Ein-Chip-System umfasst einen Bus, eine mit dem Bus verbundene Netzwerkschnittstelle, einen mit dem Bus verbundenen Prozessor und ein mit dem Bus verbundenes Schadsoftwareerkennungsmodul. Das Schadsoftwareerkennungsmodul vergleicht über den Bus übertragene Daten mittels eines Mustererkennungsverfahrens (Pattern Recognition) mit Signaturen bekannter Schadsoftware, welche in einer in dem Endgerät angeordneten Datenbank gespeichert sind und regelmäßig aktualisiert werden.

Ein Nachteil eines solchen Vorgehens besteht allerdings darin, dass ein jederzeit vollkommener Schutz des Systems prinzipiell ausgeschlossen ist. Denn bei einer neuen unbekannten Schadsoftware steht noch keine Signatur für einen Vergleich zur Verfügung. Zudem kann die für einen Vergleich verfügbare Signaturdatenbank beispielsweise infolge einer versäumten Aktualisierung unvollständig sein, wodurch sich das Risiko eines geschützten Geräts weiter erhöht, von einer Schadsoftware befallen zu werden. Abgesehen davon dürfte ein bloßer Programmierfehler eines Betriebssystems eines Funktionssystems kaum an einer charakteristischen Bytefolge zu erkennen sein.

Zum Schützen eines Steuergeräts eines Fahrzeugs offenbart DE 10 2015 002 191 A1 einen Prozessor, welcher für einen privilegierten Zugriff auf einen Speicher des Steuergeräts einen in einem Systemspeicher gespeicherten Sicherheitscode verwendet. Dagegen offenbart DE 10 2016 123 744 A1 ein Ein-Chip-System für ein mobiles Endgerät eines Mobilfunknetzes mit einem Schutzsystem, welches Zugriffe von Prozessoren auf Adressbereiche eines Arbeitsspeichers und einer externen Speichervorrichtung steuert, welche an das Ein-Chip-System angeschlossen sind.

Eine weitere Möglichkeit zum Erkennen einer Schadsoftware besteht darin, ein Verhalten eines peripheren Geräts zu analysieren. Aus der WO 2016/105832 A1 ist eine Vorrichtung zum Erkennen einer Schadsoftware auf einem peripheren Gerät bekannt, welches mit der Vorrichtung verbunden ist. Die Vorrichtung kann ein Ein-Chip-System umfassen und ist konfiguriert, eine Identität des peripheren Geräts zu erfassen, eine Kommunikation mit dem peripheren Gerät zu überwachen und die Verbindung zu dem peripheren Gerät zu blockieren, wenn die überwachte Kommunikation mit der erfassten Identität des peripheren Geräts unverträglich ist. Allerdings kommt ein Blockieren einer Funktionseinheit eines Fahrzeugs im Allgemeinen aus Sicherheitsgründen nicht in Betracht.

Rechnernetzwerke, bei denen üblicherweise mehrere Rechner über ein oder mehrere Netzwerkgeräte miteinander verbunden sind, können alternativ oder zusätzlich mittels sogenannter Firewalls geschützt werden. Eine Firewall dient dem Überwachen eines Kommunizierens der Rechner untereinander und ist konfiguriert, ein erlaubtes Kommunizieren zuzulassen und ein verbotenes Kommunizieren zu unterbinden. Dabei ist die Firewall zumeist als Software vorgesehen, welche auf einem Rechner oder einem Netzwerkgerät, beispielsweise einem Router oder einem Switch, gespeichert ist und ausgeführt wird.

Die EP 1 260 910 A2 beschreibt ein solches Netzwerkgerät mit mehreren Netzwerkschnittstellen, welches mit einer entsprechenden Software auch als Firewall konfiguriert sein kann, um an die Netzwerkschnittstellen angeschlossene Netzwerkteilnehmer vor einem unberechtigten Zugriff zu schützen. Das Netzwerkgerät umfasst ein oder mehrere Ein-Chip-Systeme, welche jeweils mehrere Netzwerkschnittstellen zum Anschließen von Netzwerkteilnehmern und mehrere Standardschnittstellen, einen Bus und mehrere Prozessoren aufweisen, welche über den mindestens einen Bus mit den mehreren Schnittstellen verbunden sind, so dass jeder Prozessor auf jede Schnittstelle Zugriff hat. Jedoch kann eine solche Firewall selbst Ziel eines Angriffs durch eine Schadsoftware sein und von der Schadsoftware in ihrer Funktion beeinträchtigt werden, wodurch der effektive Schutz des Rechnernetzwerks verringert oder beseitigt ist.

Der Erfindung liegt daher die Aufgabe zugrunde, ein Ein-Chip-System zur Verfügung zu stellen, welches die beschriebenen Nachteile vermeidet und einen effektiven Schutz bewirkt. Darüber hinaus ist es Aufgabe der Erfindung, ein einfaches Verfahren zum Schaffen eines effektiven Schutzes eines Ein-Chip-Systems vorzuschlagen.

Ein Gegenstand der vorliegenden Erfindung ist ein Ein-Chip-System (System on Chip, SoC) für ein Steuergerät eines Fahrzeugs. Das Ein-Chip-System umfasst mindestens einen Bus, mindestens eine mit dem mindestens einen Bus verbundene Steuereinheit (Controller, Ctrlr) zum Steuern eines der mindestens einen Steuereinheit zugeordneten peripheren Geräts, und mehrere mit dem mindestens einen Bus verbundene Prozessoren (Central Processing Unit, CPU). Bei einem solchen Ein-Chip-System hat grundsätzlich jeder Prozessor Zugriff auf jede Steuereinheit und damit auf ein der Steuereinheit zugeordnetes peripheres Gerät. Um auf ein bestimmtes peripheres Gerät zuzugreifen, übermittelt ein Prozessor eine entsprechende Zugriffsanforderung an die dem bestimmten peripheren Gerät zugeordnete Steuereinheit. Beispielsweise kann ein Datenspeicher als peripheres Gerät mit einer entsprechenden Steuereinheit des Ein-Chip-Systems verbunden sein.

Erfindungsgemäß umfasst das Ein-Chip-System ein Schutzsystem (Input Output Firewall, IOFW), welches konfiguriert ist, einen erlaubten Zugriff eines bestimmten Prozessors auf eine bestimmte Steuereinheit oder der bestimmten Steuereinheit auf den bestimmten Prozessor zuzulassen und einen verbotenen Zugriff eines bestimmten Prozessors auf eine bestimmte Steuereinheit oder der bestimmten Steuereinheit auf den bestimmten Prozessor zu verhindern. Das Schutzsystem ist in Hardware ausgebildet und folglich selbst vor einer schädlichen Beeinflussung geschützt. Mittels des Schutzsystems kann der Wirkungsbereich jedes Prozessors genau definiert werden. Mit anderen Worten kann ein peripheres Gerät, beispielsweise ein externer Datenspeicher, effektiv vor einem Zugriff eines Prozessors geschützt werden. Umgekehrt kann das Schutzsystem auch jeden Prozessor vor einer Unterbrechung (Interrupt) durch ein peripheres Gerät schützen.

In einer bevorzugten Ausführungsform umfasst das Schutzsystem eine Berechtigungsliste mit mindestens einem Eintrag, welcher zu einem erlaubten Zugriff oder einem verbotenen Zugriff korrespondiert. Die Berechtigungsliste kann demnach sowohl positive Einträge, also Berechtigungseinträge, als auch negative Einträge, also Ausschlusseinträge, umfassen. Dies erlaubt ein einfaches Definieren von Regeln und Ausnahmen.

In einer Ausführungsform weist jeder Eintrag ein Tupel auf, welches eine ID eines Prozessors, eine ID einer Steuereinheit, einen Adressbereich eines der Steuereinheit zugeordneten peripheren Geräts und insbesondere eine maximale Frequenz erlaubter Zugriffe umfasst. Durch das Angeben von Adressbereichen können Zugriffserlaubnisse und Zugriffsverbote für ein einziges peripheres Gerät differenziert vergeben werden. Dies ermöglicht ein gemeinsames und gleichzeitig voneinander sauber getrenntes Nutzen eines peripheren Geräts durch mehrere Prozessoren. Unter der maximalen Frequenz erlaubter Zugriffe ist eine maximale Anzahl erlaubter Zugriffe pro Zeiteinheit zu verstehen. Mit einer solchen Angabe kann ein blockierendes Überlasten des Prozessors durch von dem peripheren Gerät verursachte Unterbrechungen (Denial of Service, DoS) verhindert werden.

In weiteren Ausführungsformen ist ein nur lesbarer Datenspeicher (Read Only Memory, ROM) vorgesehen, in dem die Berechtigungsliste speicherbar oder gespeichert ist. In dem nur lesbaren Datenspeicher ist die Berechtigungsliste vor einem unkontrollierten Überschreiben effektiv geschützt.

In noch anderen Ausführungsformen sind ein erster Bus und ein von dem ersten Bus separater zweiter Bus vorgesehen und sind die mehreren Prozessoren über den ersten Bus mit dem Schutzsystem verbunden und ist das Schutzsystem über den zweiten Bus mit der mindestens einen Steuereinheit verbunden. Bei dieser Konfiguration muss jede Kommunikation zwischen einem Prozessor und einem peripheren Gerät das Schutzsystem passieren.

In einer Ausführungsform ist das Schutzsystem konfiguriert, eine von dem ersten Bus oder von dem zweiten Bus empfangene erlaubte Zugriffsanforderung jeweils an den zweiten Bus oder an den ersten Bus auszugeben und eine von dem ersten Bus oder von dem zweiten Bus empfangene verbotene Zugriffsanforderung zu blockieren. Die Konfiguration kann demnach als busblockierend bezeichnet werden, da sie ein Zugreifen eines Prozessors auf einen Adressbereich eines peripheren Geräts oder eines peripheren Geräts auf einen Prozessor, beispielsweise einen DoS-Angriff, unterbinden, d.h. blockieren kann. Weder der Prozessor noch die dem peripheren Gerät zugeordnete Steuereinheit benötigen folglich eine Kenntnis der Berechtigungsliste des Schutzsystems.

In einer alternativen Ausführungsform ist genau ein Bus vorgesehen und ist das Schutzsystem mit dem Bus verbunden. Bei dieser Konfiguration kann jede Kommunikation zwischen einem Prozessor und einem peripheren Gerät von dem Schutzsystem überwacht werden. Ein zweiter Bus ist nicht erforderlich.

In einer Ausführungsform ist das Schutzsystem konfiguriert, den Bus zu überwachen und bei einer verbotenen Zugriffsanforderung einen beteiligten Prozessor und/oder eine beteiligte Steuereinheit zu benachrichtigen. Dabei gelangt eine verbotene Zugriffsanforderung zwar zu einem beteiligten Prozessor oder zu einer beteiligten Steuereinheit. Der beteiligte Prozessor oder die beteiligte Steuereinheit kann jedoch aufgrund der Benachrichtigung ein Durchführen des angeforderten Zugriffs unterlassen. Üblicherweise löst ein beteiligtes peripheres Gerät eine sogenannte Unterbrechung aus, um ein Reagieren eines beteiligten Prozessors auf ein in dem peripheren Gerät aufgetretenes Ereignis zu erwirken. Im Falle einer verbotenen Unterbrechung oder einer zu hohen Frequenz einer an sich erlaubten Unterbrechung kann von dem Schutzsystem eine spezielle Unterbrechung generiert werden, auf welche beteiligte Prozessoren entsprechend reagieren können.

In einer weiteren Ausführungsform ist das Schutzsystem über eine separate Benachrichtigungsleitung mit den Prozessoren und/oder den Steuereinheiten verbunden. Demnach kann das Schutzsystem den Prozessoren bzw. Steuereinheiten eine verbotene Zugriffsanforderung durch Senden eines Signals über die Benachrichtigungsleitung anzeigen.

In einer alternativen Ausführungsform weist der Bus ein zusätzliches Benachrichtigungsbit auf und ist das Schutzsystem konfiguriert, das zusätzliche Benachrichtigungsbit bei einer verbotenen Zugriffsanforderung zu setzen. Entsprechend kann das Schutzsystem den Prozessoren bzw. Steuereinheiten die verbotene Zugriffsanforderung durch Setzen des Benachrichtigungsbits anzeigen.

In einer weiteren Ausführungsform ist das Schutzsystem konfiguriert, der verbotenen Zugriffsanforderung zugeordnete Daten, welche nach der verbotenen Zugriffsanforderung über den Bus übertragen werden, zu verändern, insbesondere auf einen bestimmten Wert und bevorzugt auf Null zu setzen. Ein zusätzliches Verändern von zu der verbotenen Zugriffsanforderung gehörenden Daten durch das Schutzsystem kann die Effektivität des Schutzes weiter erhöhen, insbesondere wenn die Steuereinheiten und/oder an die Steuereinheiten angeschlossene periphere Geräte konfiguriert sind, von dem Schutzsystem auf eine spezielle Weise, beispielsweise durch Nullsetzen, veränderte Daten zu verwerfen, also nicht zu verarbeiten.

Gegenstand der Erfindung ist auch ein Verfahren zum Steuern eines wechselseitigen Zugreifens eines Prozessors (Central Processing Unit) eines Ein-Chip-Systems (System on Chip, SoC), insbesondere eines erfindungsgemäßen Ein-Chip-Systems, und einer Steuereinheit (Controller, Ctrlr) des Ein-Chip-Systems zum Steuern eines der Steuereinheit zugeordneten peripheren Geräts, bei dem von einem Schutzsystem (Input Output Firewall, IOFW) des Ein-Chip-Systems ein erlaubter Zugriff des Prozessors auf die Steuereinheit oder der Steuereinheit auf den Prozessor zugelassen und ein unerlaubter Zugriff des Prozessors auf die Steuereinheit oder der Steuereinheit auf den Prozessor verhindert wird. Das Schutzsystem kann auf diese Weise den Wirkungsbereich jedes Prozessors genau definieren. Verschiedene Betriebssysteme, welche von verschiedenen Prozessoren ausgeführt werden, können entsprechend sauber voneinander getrennt werden. Umgekehrt können die Prozessoren vor Unterbrechungen durch die peripheren Geräte geschützt werden.

In einer bevorzugten Ausführungsform wird eine Berechtigungsliste, welche mindestens einen zu einem erlaubten Zugriff oder zu einem verbotenen Zugriff korrespondierenden Eintrag aufweist, während einer Bootsequenz des Ein-Chip-Systems aus einem nur lesbaren Speicher (Read Only Memory, ROM) in das Schutzsystem geladen und/oder wird jeder Zugriff eines bestimmten Prozessors an ein bestimmtes Steuergerät mit der Berechtigungsliste verglichen. Mit anderen Worten wird das Schutzsystem zu einem sehr frühen Zeitpunkt des Betriebs des Ein-Chip-Systems initialisiert, wo ein schädliches Beeinflussen der Initialisierung durch ein Betriebssystem eines Funktionssystems des Fahrzeugs praktisch ausgeschlossen ist. Während des Betriebs des Ein-Chip-Systems lässt sich ein erlaubter Zugriff von einem verbotenen Zugriff durch ein einfaches Vergleichen der entsprechenden Zugriffsanforderung mit der Berechtigungsliste unterscheiden.

Die Erfindung ist anhand von Ausführungsformen in den Zeichnungen schematisch dargestellt und wird unter Bezugnahme auf die Zeichnungen weiter beschrieben. Es zeigt:
- Figur 1: in einer schematischen Darstellung eine in einem nur lesbaren Datenspeicher gespeicherte Berechtigungsliste einer Ausführungsform eines erfindungsgemäßen Ein-Chip-Systems,
- Figur 2: in einer schematischen Darstellung ein Blockschaltbild einer Ausführungsform des erfindungsgemäßen Ein-Chip-Systems,
- Figur 3: in einer schematischen Darstellung ein Blockschaltbild des in Figur 2 gezeigten Ein-Chip-Systems bei einem in einem peripheren Gerät aufgetretenen Ereignis,
- Figur 4: in einer schematischen Darstellung ein Blockschaltbild einer weiteren Ausführungsform des erfindungsgemäßen Ein-Chip-Systems,
- Figur 5: in einer schematischen Darstellung ein Blockschaltbild des in Figur 4 gezeigten Ein-Chip-Systems bei einem in einem peripheren Gerät aufgetretenen Ereignis.

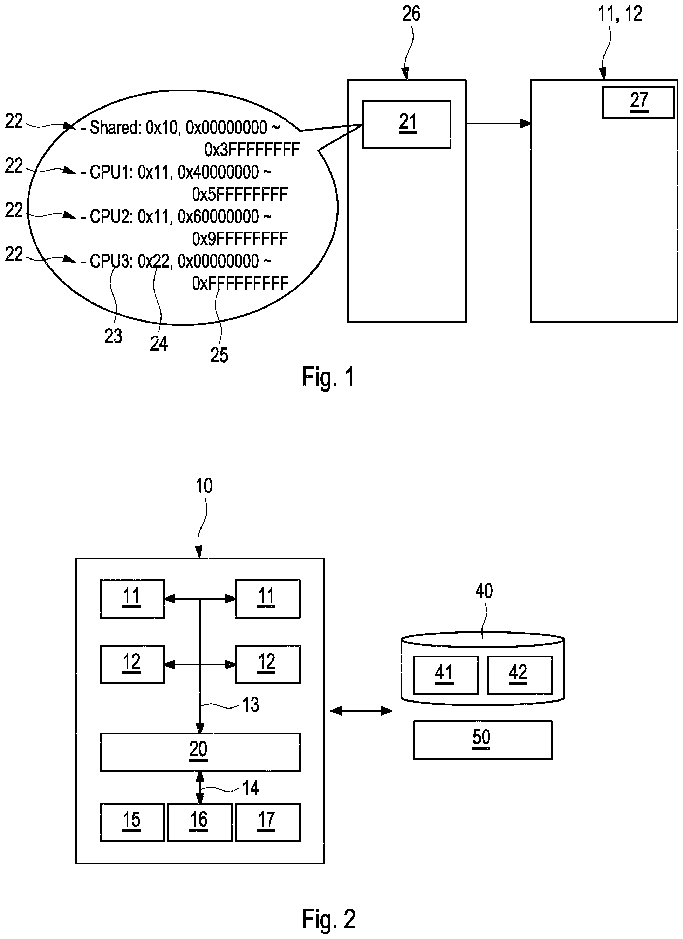

Figur 1 zeigt in einer schematischen Darstellung eine in einem nur lesbaren Datenspeicher 26 gespeicherte Berechtigungsliste 21 einer Ausführungsform eines erfindungsgemäßen Ein-Chip-Systems 10. Die Berechtigungsliste 21 umfasst als Komponente eines Schutzsystems 20 (s. Figuren 2 bis 5) mehrere Einträge 22, welche jeweils zu einem erlaubten Zugriff korrespondieren.

Jeder Eintrag 22 weist ein Tupel auf, welches eine ID 23 eines Prozessors 11, 12 des Ein-Chip-Systems 10, eine ID 24 einer Steuereinheit 15, 16, 17 des Ein-Chip-Systems 10 und einen Adressbereich 25 eines der Steuereinheit 15, 16, 17 zugeordneten peripheren Geräts 40, 50 umfasst. Das Tupel umfasst weiterhin eine maximale Frequenz erlaubter Zugriffe (nicht dargestellt) auf den mit der ID 23 bezeichneten Prozessor 11, 12 durch die mit der ID 24 bezeichnete Steuereinheit 15, 16, 17.

Lediglich beispielhaft sind hier vier Einträge 22 gezeigt, von denen der erste Eintrag 22 einen von sämtlichen Prozessoren 11, 12 gemeinsam benutzten Adressbereich 25 zu einer Steuereinheit 15, 16, 17 definiert, während die übrigen drei Einträge 22 jeweils einem Prozessor 11, 12 einen Adressbereich 25 einer Steuereinheit 15, 16, 17 exklusiv zuordnen. Die Berechtigungsliste 21 kann aber auch Einträge 22 umfassen, welche jeweils zu einem verbotenen Zugriff korrespondieren, um auf einfache Weise einen Verbotsbereich innerhalb eines erlaubten Adressbereichs 25 bestimmen zu können.

Der nur lesbare Datenspeicher 26 ist als DRAM (Dynamic Random Access Memory) vorgesehen und in dem Ein-Chip-System 10 integriert, kann aber auch als ein externes Bauteil ausgebildet sein. Die Prozessoren 11, 12 des Ein-Chip-Systems 10 umfassen jeweils ein Schutzsystemregister 27.

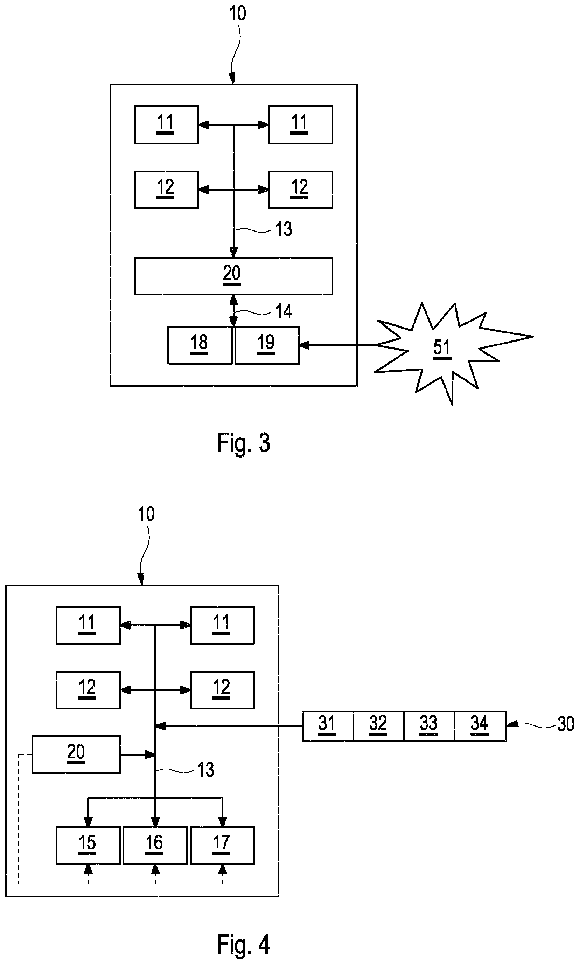

Bei einer Bootsequenz des Ein-Chip-Systems 10 wird zunächst eine Adresse der Berechtigungsliste 21 in dem nur lesbaren Datenspeicher 26 ermittelt. Dann wird die Berechtigungsliste 21 aus dem nur lesbaren Datenspeicher 26 über ein spezielles Schutzsystemregister 27 in ein Schutzsystem 20 geladen. Während des Betriebs des Ein-Chip-Systems wird die Berechtigungsliste 21 dann von dem Schutzsystem 20 verwendet, um eine Zugriffsanforderung 30 (s. Figur 3) eines Prozessors 11, 12 mit erlaubten Zugriffen oder verbotenen Zugriffen zu vergleichen.

Figur 2 zeigt in einer schematischen Darstellung ein Blockschaltbild einer Ausführungsform des erfindungsgemäßen Ein-Chip-Systems 10. Das Ein-Chip-System 10 umfasst einen ersten Bus 13 und mehrere Prozessoren 11, 12, die mit dem ersten Bus 13 verbunden sind. Aus Sicherheitsgründen sind die Prozessoren 11 für das Ausführen sicherheitskritischer Betriebssysteme vorgesehen, während die Prozessoren 12 für das Ausführen sonstiger Betriebssysteme vorgesehen sind.

Ferner umfasst das Ein-Chip-System 10 einen von dem ersten Bus 13 separaten zweiten Bus 14 und eine Steuereinheit 15 für externe Datenspeicher, eine Steuereinheit 16 für allgemeine Zwecke sowie eine sonstige Steuereinheit 17. Die Steuereinheiten 15, 16, 17 sind mit dem zweiten Bus 14 verbunden.

Der Steuereinheit 15 ist ein peripheres Gerät 40 zugeordnet, welches als externer Datenspeicher ausgebildet ist. In dem peripheren Gerät 40 sind sicherheitskritische Daten 41 und sonstige Daten 42 in verschiedenen Adressbereichen 25 gespeichert. Der Steuereinheit 16 und/oder der Steuereinheit 17 ist ein weiteres peripheres Gerät 50 zugeordnet, welches als eine Schnittstelle (beispielsweise UART, I²C, SPI) ausgebildet ist.

Das Ein-Chip-System 10 umfasst ferner das Schutzsystem 20, welches sowohl mit dem ersten Bus 13 als auch mit dem zweiten Bus 14 verbunden ist. Das Schutzsystem 20 ist konfiguriert, jede Zugriffsanforderung 30 eines Prozessors 11, 12 an eine Steuereinheit 15, 16, 17 mit der Berechtigungsliste 21 zu vergleichen und einen erlaubten Zugriff eines bestimmten Prozessors 11, 12 auf eine bestimmte Steuereinheit 15, 16, 17 zuzulassen und einen verbotenen Zugriff eines bestimmten Prozessors 11, 12 auf eine bestimmte Steuereinheit 15, 16, 17 zu verhindern.

Die Konfiguration des Schutzsystems 20 ist busblockierend, so dass eine von dem ersten Bus 13 oder von dem zweiten Bus 14 empfangene erlaubte Zugriffsanforderung 30 jeweils an den zweiten Bus 14 oder an den ersten Bus 13 ausgegeben und eine von dem ersten Bus 13 oder von dem zweiten Bus 14 empfangene verbotene Zugriffsanforderung 30 blockiert wird, also nicht an den jeweils anderen Bus 13, 14 ausgegeben wird.

Figur 3 zeigt in einer schematischen Darstellung ein Blockschaltbild des in Figur 2 gezeigten Ein-Chip-Systems 10 bei einem in einem peripheren Gerät 50 aufgetretenen Ereignis 51. Durch das Ereignis 51 wird in einem speziellen Unterbrechungsgenerator 18 oder einem allgemeinen Unterbrechungsgenerator 19 (Generic Interrupt Controller, GIC) des Ein-Chip-Systems 10 eine Unterbrechung für die Prozessoren 11, 12 erzeugt und über den zweiten Bus 14, das Schutzsystem 20 und den ersten Bus 13 an erlaubte beteiligte Prozessoren 11, 12 übermittelt. Wenn die Frequenz der in dem peripheren Gerät 50 auftretenden Ereignisse 51 und damit die Frequenz der erzeugten Unterbrechungen eine in einem korrespondierenden Eintrag 22 der Berechtigungsliste 21 bestimmte maximale Frequenz übersteigt, blockiert das Schutzsystem 20 die Übermittlung der erzeugten Unterbrechungen an den in dem Eintrag 22 bezeichneten Prozessor 11, 12.

Figur 4 zeigt in einer schematischen Darstellung ein Blockschaltbild einer weiteren Ausführungsform des erfindungsgemäßen Ein-Chip-Systems 10. Das Ein-Chip-System 10 unterscheidet sich von dem zuvor beschriebenen Ein-Chip-System dadurch, dass genau ein Bus 13 vorgesehen ist und die Prozessoren 11, 12, die Steuereinheiten 15, 16, 17 und das Schutzsystem 20 mit dem Bus 13 verbunden sind. Die Konfiguration des Schutzsystems 20 ist busüberwachend, so dass der Bus 13 überwacht und bei einer verbotenen Zugriffsanforderung 30 eines Prozessors 11, 12 die beteiligte Steuereinheit 15, 16, 17 über eine separate Benachrichtigungsleitung 28 benachrichtigt wird. Weiterhin ist das Schutzsytem 20 konfiguriert, der verbotenen Zugriffsanforderung 30 zugeordnete Daten, welche nach der verbotenen Zugriffsanforderung 30 über den Bus 13 übertragen werden, auf einen bestimmten Wert, beispielsweise Null zu setzen. Jede Zugriffsanforderung 30 umfasst einen Schutzsystemkennzeichner 31, eine Prozessor-ID 32, eine Steuereinheit-ID 33 und einen Adressbereich 34. Der Schutzsystemkennzeichner 31 wird von den Steuereinheiten 15, 16, 17 ignoriert.

In einer nicht dargestellten alternativen Ausführungsform weist der Bus ein zusätzliches Benachrichtigungsbit auf. Entsprechend ist das Schutzsystem 20 konfiguriert, das zusätzliche Benachrichtigungsbit bei einer verbotenen Zugriffsanforderung 30 zu setzen.

Während des Betriebs des Ein-Chip-Systems 10 prüft bzw. vergleicht das Schutzsystem 20 jede auf dem Bus 13 übertragene und mit einem Schutzsystemkennzeichner 31 versehene Zugriffsanforderung 30 mit jedem Eintrag 22 der Berechtigungsliste 21. Bei der Prüfung einer Zugriffsanforderung 30 werden die Prozessor-ID 32, die Steuereinheit-ID 33 und der Adressbereich 34 der Zugriffsanforderung 30 jeweils mit der Prozessor-ID 23, der Steuereinheit-ID 24 und dem Adressbereich 34 jedes Eintrags 22 der Berechtigungsliste verglichen. Das Schutzsystem 20 erlaubt den durch die Zugriffsanfoderung 30 bestimmten Zugriff, wenn er mit einem Eintrag 22 der Berechtigungsliste konform ist. Andernfalls benachrichtigt das Schutzsystem 20 beteiligte Prozessoren 11, 12 und/oder Steuereinheiten 15, 16, 17 über die Benachrichtigungsleitung 28 und setzt der verbotenen Zugriffsanforderung 30 zugeordnete Daten, welche nach der verbotenen Zugriffsanforderung 30 über den Bus 13 übertragen werden, auf einen bestimmten Wert, beispielsweise Null.

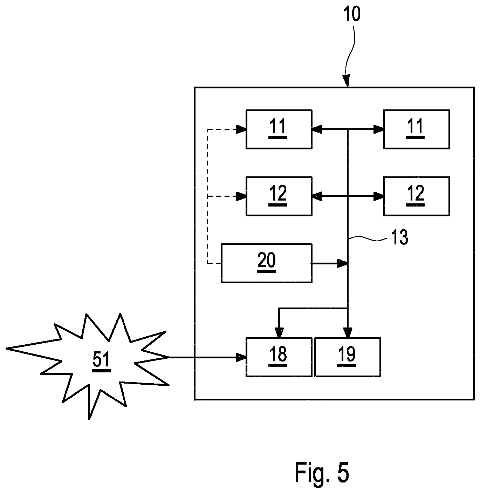

Figur 5 zeigt in einer schematischen Darstellung ein Blockschaltbild des in Figur 4 gezeigten Ein-Chip-Systems 10 bei einem in einem peripheren Gerät 50 (s. Figur 2) aufgetretenen Ereignis 51. Durch das Ereignis 51 wird in einem speziellen Unterbrechungsgenerator 18 oder einem allgemeinen Unterbrechungsgenerator 19 des Ein-Chip-Systems 10 eine Unterbrechung für die Prozessoren 11, 12 erzeugt. Das Schutzsystem 20 benachrichtigt mögliche beteiligte Prozessoren 11, 12 über eine separate Leitung.

Das erfindungsgemäße Ein-Chip-System 20 besitzt den Vorteil, Zugriffe der Prozessoren 11, 12 auf periphere Geräte 40, 50, welche den Steuereinheiten 15, 16, 17 zugeordnet sind, differenziert nach Adressbereichen 25 sowie Unterbrechungen der Prozessoren 11, 12 durch periphere Geräte 40, 50 zu erlauben oder zu verbieten. Dadurch, dass das entsprechende Schutzsystem 20 als Komponente des Ein-Chip-Systems 20 in Hardware realisiert ist, kann es durch schädliche Software nicht selbst beeinträchtigt sein. Die sicherheitsrelevante Berechtigungsliste 21 ist durch einen nur lesbaren Datenspeicher 21 vor einer Beeinträchtigung geschützt und initialisiert das Schutzsystem 20 während der Bootsequenz des Ein-Chip-Systems 10. Auf diese Weise lassen sich vor allem systemkritische Betriebssysteme von Funktionssystemen eines Fahrzeugs effektiv vor einer Beeinträchtigung durch Programmierfehler oder Schadsoftware schützen.

### BEZUGSZEICHENLISTE:

- 10: Ein-Chip-System
- 11: Prozessor
- 12: Prozessor
- 13: (Erster) Bus
- 14: Zweiter Bus
- 15: Steuereinheit für externen Datenspeicher
- 16: Steuereinheit für allgemeine Zwecke
- 17: Sonstige Steuereinheit
- 18: Spezieller Unterbrechungsgenerator
- 19: Allgemeiner Unterbrechungsgenerator
- 20: Schutzsystem
- 21: Berechtigungsliste
- 22: Eintrag
- 23: Prozessor-ID
- 24: Steuereinheit-ID
- 25: Adressbereich
- 26: Nur lesbarer Datenspeicher
- 27: Schutzsystemregister
- 28: Benachrichtigungsleitung
- 30: Zugriffsanforderung
- 31: Schutzsystemkennzeichner
- 32: Prozessor-ID
- 33: Steuereinheit-ID
- 34: Adressbereich
- 40: Peripheres Gerät
- 41: Sicherheitskritische Daten
- 42: Sonstige Daten
- 50: Peripheres Gerät
- 51: Ereignis

## Patentansprüche

1. Ein-Chip-System (10) für ein Steuergerät eines Fahrzeugs mit mindestens einem Bus (13, 14), mindestens einer mit dem mindestens einen Bus (13, 14) verbundenen Steuereinheit (15, 16, 17) zum Steuern eines der mindestens einen Steuereinheit (15, 16, 17) zugeordneten peripheren Geräts (40, 50), mehreren mit dem mindestens einen Bus (13) verbundenen Prozessoren (11, 12) und einem Schutzsystem (20), welches konfiguriert ist, einen erlaubten Zugriff eines bestimmten Prozessors (11, 12) auf eine bestimmte Steuereinheit (15, 16, 17) oder der bestimmten Steuereinheit (15, 16, 17) auf den bestimmten Prozessor (11, 12) zuzulassen und einen verbotenen Zugriff eines bestimmten Prozessors (11, 12) auf eine bestimmte Steuereinheit (15, 16, 17) oder der bestimmten Steuereinheit (15, 16, 17) auf den bestimmten Prozessor (11, 12) zu verhindern.

2. Ein-Chip-System nach Anspruch 1, bei dem das Schutzsystem (20) eine Berechtigungsliste (21) mit mindestens einem Eintrag (22) umfasst, welcher zu einem erlaubten Zugriff oder einem verbotenen Zugriff korrespondiert.

3. Ein-Chip-System nach Anspruch 2, bei dem jeder Eintrag (22) ein Tupel aufweist, welches eine ID (23) eines Prozessors (11, 12), eine ID (24) einer Steuereinheit (15, 16, 17), einen Adressbereich (25) eines der Steuereinheit (15, 16, 17) zugeordneten peripheren Geräts (40, 50) und insbesondere eine maximale Frequenz erlaubter Zugriffe umfasst.

4. Ein-Chip-System nach einem der Ansprüche 1 bis 3, bei dem ein nur lesbarer Datenspeicher (18) vorgesehen ist, in dem die Berechtigungsliste (21) speicherbar oder gespeichert ist.

5. Ein-Chip-System nach einem der Ansprüche 1 bis 4, bei dem ein erster Bus (13) und ein von dem ersten Bus (13) separater zweiter Bus (14) vorgesehen sind und die mehreren Prozessoren (11, 12) über den ersten Bus (13) mit dem Schutzsystem (20) verbunden und das Schutzsystem (20) über den zweiten Bus (14) mit der mindestens einen Steuereinheit (15, 16, 17) verbunden ist.

6. Ein-Chip-System nach Anspruch 5, bei dem das Schutzsystem (20) konfiguriert ist, eine von dem ersten Bus (13) oder von dem zweiten Bus (14) empfangene erlaubte Zugriffsanforderung (30) jeweils an den zweiten Bus (14) oder an den ersten Bus (13) auszugeben und eine von dem ersten Bus (13) oder von dem zweiten Bus (14) empfangene verbotene Zugriffsanforderung (30) zu blockieren.

7. Ein-Chip-System nach einem der Ansprüche 1 bis 4, bei dem genau ein Bus (13) vorgesehen ist und das Schutzsystem (20) mit dem Bus (13) verbunden und insbesondere konfiguriert ist, den Bus (13) zu überwachen und bei einer verbotenen Zugriffsanforderung (30) einen beteiligten Prozessor (11, 12) und/oder eine beteiligte Steuereinheit (15, 16, 17) zu benachrichtigen.

8. Ein-Chip-System nach Anspruch 7, bei dem das Schutzsystem (20) über eine spezielle Benachrichtigungsleitung (28) mit den Prozessoren (11, 12) und/oder den beteiligten Steuereinheiten (15, 16, 17) verbunden ist oder bei dem der Bus (13) ein zusätzliches Benachrichtigungsbit aufweist und das Schutzsystem (20) konfiguriert ist, das zusätzliche Benachrichtigungsbit bei einer verbotenen Zugriffsanforderung (30) zu setzen, und bei dem insbesondere das Schutzsystem (20) konfiguriert ist, der verbotenen Zugriffsanforderung (30) zugeordnete Daten, welche nach der verbotenen Zugriffsanforderung (30) über den Bus (13) übertragen werden, zu verändern, insbesondere auf einen bestimmten Wert und bevorzugt auf Null zu setzen.

9. Verfahren zum Steuern eines wechselseitigen Zugreifens eines Prozessors (11, 12) eines Ein-Chip-Systems, insbesondere eines Ein-Chip-Systems (10) nach einem der Ansprüche 1 bis 8, und einer Steuereinheit (15, 16, 17) des Ein-Chip-Systems zum Steuern eines der Steuereinheit (15, 16, 17) zugeordneten peripheren Geräts (40, 50), bei dem von einem Schutzsystem (20) des Ein-Chip-Systems ein erlaubter Zugriff des Prozessors (11, 12) auf die Steuereinheit (15, 16, 17) oder der Steuereinheit (15, 16, 17) auf den Prozessor (11, 12) zugelassen und ein unerlaubter Zugriff des Prozessors (11, 12) auf die Steuereinheit (15, 16, 17) oder der Steuereinheit (15, 16, 17) auf den Prozessor (11, 12) verhindert wird.

10. Verfahren nach Anspruch 9, bei dem eine Berechtigungsliste (21), welche mindestens einen zu einem erlaubten Zugriff oder einem verbotenen Zugriff korrespondierenden Eintrag (22) aufweist, während einer Bootsequenz des Ein-Chip-Systems aus einem nur lesbaren Datenspeicher (18) in das Schutzsystem (20) geladen wird und/oder jede Zugriffsanforderung (30) eines bestimmten Prozessors (11, 12) an ein bestimmtes Steuergerät (15, 16, 17) mit der Berechtigungsliste (21) verglichen wird.

## Claims

1. System on chip (10) for a control device of a vehicle with at least one bus (13, 14), at least one control unit (15, 16, 17) connected to the at least one bus (13, 14) for controlling a peripheral device (40, 50) assigned to the at least one control unit (15, 16, 17), multiple processors (11, 12) connected to the at least one bus (13) and a protection system (20), which is configured to authorise allowed access of a certain processor (11, 12) to a certain control unit (15, 16, 17) or of the certain control unit (15, 16, 17) to the certain processor (11, 12) and to prevent prohibited access of a certain processor (11,12) to a certain control unit (15, 16, 17) or of the certain control unit (15, 16, 17) to the certain processor (11, 12).

2. System on chip according to claim 1, in which the protection system (20) comprises an authorisation list (21) with at least one entry (22) which corresponds to allowed access or to prohibited access.

3. System on chip according to claim 2, in which each entry (22) has a tuple which comprises an ID (23) of a processor (11, 12), an ID (24) of a control unit (15, 16, 17), an address range (25) of a peripheral device (40, 50) assigned to the control unit (15, 16, 17) and in particular a maximum frequency of allowed accesses.

4. System on chip according to any one of claims 1 to 3, in which a read-only data memory (18) is provided in which the authorisation list (21) can be stored or is stored.

5. System on chip according to any one of claims 1 to 4, in which a first bus (13) and a second bus (14) separate from the first bus (13) are provided and multiple processors (11, 12) are connected via the first bus (13) to the protection system (20) and the protection system (20) is connected via the second bus (14) to the at least one control unit (15, 16, 17).

6. System on chip according to claim 5, in which the protection system (20) is configured to output an allowed access request (30) received from the first bus (13) or from the second bus (14) respectively to the second bus (14) or to the first bus (13) and to block a prohibited access request (30) received from the first bus (13) or from the second bus (14).

7. System on chip according to any one of claims 1 to 4, in which exactly one bus (13) is provided and the protection system (20) is connected to the bus (13) and, in particular, is configured to monitor the bus (13) and to notify a participating processor (11, 12) and/or a participating control unit (15, 16, 17) when an access request (30) is prohibited.

8. System on chip according to claim 7, in which the protection system (20) is connected to the processors (11, 12) and/or the participating control units (15, 16, 17) via a special notification line (28), or in which the bus (13) has an additional notification bit and the protection system (20) is configured to set the additional notification bit in the event of a prohibited access request (30), and in which in particular the protection system (20) is configured to change data assigned to the prohibited access request (30), which data are transmitted via the bus (13) after the prohibited access request (30), in particular to set a certain value and preferably to set this to zero.

9. Method for controlling mutual access of a processor (11, 12) of a system on chip, in particular a system on chip (10) according to any one of claims 1 to 8, and a control unit (15, 16, 17) of the system on chip for controlling a peripheral device (40, 50) assigned to the control unit (15, 16, 17), in which a protection system (20) of the system on chip authorises an allowed access of the processor (11, 12) to the control unit (15, 16, 17) or of the control unit (15, 16, 17) to the processor (11, 12) and prevents an unauthorised access of the processor (11, 12) to the control unit (15, 16, 17) or of the control unit (15, 16, 17) to the processor (11, 12).

10. Method according to claim 9, in which an authorisation list (21), which has at least one entry (22) corresponding to an allowed access or a prohibited access, is loaded into the protection system (20) from the readable data memory (18) during a boot sequence of the system on chip and/or each access request (30) from a specific processor (11, 12) to a specific control device (15, 16, 17) is compared with the authorisation list (21).

## Revendications

1. Système monopuce (10) pour un dispositif de commande d'un véhicule avec au moins un bus (13, 14), au moins une unité de commande (15, 16, 17) connectée audit au moins un bus (13, 14) pour commander un appareil périphérique (40, 50) associé à la au moins une unité de commande (15, 16, 17), plusieurs processeurs (11, 12) connectés audit au moins un bus (13) et un système de protection (20) qui est configuré pour permettre à un processeur spécifique (11, 12) un accès autorisé à une unité de commande spécifique (15, 16, 17) ou à l'unité de commande spécifique (15, 16, 17) un accès autorisé au processeur spécifique (11, 12) et pour interdire au processeur spécifique (11, 12) un accès non autorisé à une unité de commande spécifique (15, 16, 17) ou à l'unité de commande spécifique (15, 16, 17) un accès non autorisé au processeur spécifique (11, 12).

2. Système monopuce selon la revendication 1, dans lequel le système de protection (20) comprend une liste d'autorisations (21) avec au moins une entrée (22) qui correspond à un accès autorisé ou un accès non autorisé.

3. Système monopuce selon la revendication 2, dans lequel chaque entrée (22) présente un tuple qui comprend un ID (23) d'un processeur (11, 12), un ID (24) d'une unité de commande (15, 16, 17), une plage d'adresses (25) d'un appareil périphérique (40, 50) associé à l'unité de commande (15, 16, 17) et en particulier une fréquence maximale d'accès autorisés.

4. Système monopuce selon l'une quelconque des revendications 1 à 3, dans lequel une mémoire de données en lecture seule (18) est prévue, dans laquelle la liste d'autorisations (21) peut être stockée ou est stockée.

5. Système monopuce selon l'une quelconque des revendications 1 à 4, dans lequel un premier bus (13) et un second bus (14) séparé du premier bus (13) sont prévus et les plusieurs processeurs (11, 12) sont connectés au système de protection (20) par l'intermédiaire du premier bus (13) et le système de protection (20) est connecté à l'au moins une unité de commande (15, 16, 17) par l'intermédiaire du second bus (14).

6. Système monopuce selon la revendication 5, dans lequel le système de protection (20) est configuré pour émettre une demande d'accès autorisée (30) reçue du premier bus (13) ou du second bus (14) respectivement au second bus (14) ou au premier bus (13) et pour bloquer une demande d'accès non autorisée (30) reçue du premier bus (13) ou du second bus (14).

7. Système monopuce selon l'une quelconque des revendications 1 à 4, dans lequel exactement un bus (13) est prévu et le système de protection (20) est connecté au bus (13) et est en particulier configuré pour surveiller le bus (13) et, en cas de demande d'accès non autorisée (30), pour notifier un processeur concerné (11, 12) et/ou une unité de commande concernée (15, 16, 17).

8. Système monopuce selon la revendication 7, dans lequel le système de protection (20) est connecté par une ligne de notification spéciale (28) aux processeurs (11, 12) et/ou aux unités de commande concernées (15, 16, 17) ou dans lequel le bus (13) présente un bit de notification supplémentaire et le système de protection (20) est configuré pour régler le bit de notification supplémentaire en cas de demande d'accès non autorisée (30), et dans lequel en particulier le système de protection (20) est configuré pour modifier les données associées à la demande d'accès non autorisée (30), qui sont transmises par l'intermédiaire du bus (13) après la demande d'accès non autorisée (30), en particulier pour les régler sur une valeur spécifique et de préférence sur zéro.

9. Procédé de commande d'un accès mutuel à un processeur (11, 12) d'un système monopuce, en particulier d'un système monopuce (10) selon l'une quelconque des revendications 1 à 8, et d'une unité de commande (15, 16, 17) du système monopuce pour commander un appareil périphérique (40, 50) associé à l'unité de commande (15, 16, 17), dans laquelle un système de protection (20) du système monopuce permet au processeur (11, 12) un accès autorisé à l'unité de commande (15, 16, 17) ou à l'unité de commande (15, 16, 17) un accès autorisé au processeur (11, 12) et interdit au processeur (11, 12) un accès non autorisé à l'unité de commande (15, 16, 17) ou à l'unité de commande (15, 16, 17) un accès non autorisé au processeur (11, 12).

10. Procédé selon la revendication 9, dans lequel une liste d'autorisations (21), qui présente au moins une entrée (22) correspondant à un accès autorisé ou un accès non autorisé est chargée dans le système de protection (20) à partir d'une mémoire de données en lecture seule (18) pendant une séquence de démarrage du système monopuce et/ou chaque demande d'accès (30) d'un processeur spécifique (11, 12) à une unité de commande spécifique (15, 16, 17) est comparée à la liste d'autorisations (21).
